# DEMANDE DE BREVET EUROPEEN

(11) **EP 0 823 579 A1**
(43) Date de publication de la demande: **11.02.1998**
(21) Numéro de dépôt: 97401905.1
(22) Date de dépôt: 08.08.1997
(51) Int. Cl.: F16L 55/16, F16L 55/28

(54) **Dispositif pour le chemisage d'un branchement, procédé de chemisage et gaine de chemisage**

(30) Priorité: 09.08.1996 FR 9610041
(71) Demandeur: SADE- COMPAGNIE GENERALE DE TRAVAUX D' HYDRAULIQUE SOCIETE ANONYME, 75008 Paris (FR)
(72) Inventeur: Albaret, Eric, 75005 Paris (FR); Bayet, Bernard, 77590 Bois-le-Roi (FR); Bourges, Pierre, 45470 Trainou (FR); Renaud, Alain, 77420 Champs-sur-Marne (FR)
(74) Mandataire: Hasenrader, Hubert

(57) **Abrégé**

Un dispositif pour mettre en place une gaine de chemisage (70) à un branchement comporte un chariot (10) qui présente une platine de support (18) pour un outil ayant un bras télescopique (20) et pivotant. L'extrémité "de travail" de ce bras est susceptible d'être déplacée en translation (F5) et est munie d'un ballon (28) apte à être gonflé pour appliquer une première et une deuxième parties de la gaine respectivement contre la paroi de la première canalisation (72) et celle de la deuxième canalisation (74), au moins dans une zone voisine de l'intersection desdites canalisations. Le dispositif comprend, en outre, des moyens de commande du pivotement du bras télescopique (20), des moyens de commande du déplacement de la partie de travail de ce bras et des moyens de commande du gonflage et du dégonflage du ballon (28).

## Description

La présente invention concerne un dispositif pour mettre en place une gaine de chemisage à un branchement entre une première et une deuxième canalisation.

Il est connu, comme le montrent par exemple les brevets français n° 2 540 599 et n° 2 592 457, de réhabiliter une canalisation en disposant à l'intérieur une gaine de chemisage. Cette gaine est classiquement réalisée sous la forme d'un ensemble stratifié imprégné de résine polymérisable. Pour la mettre en place, on l'amène dans la zone de la conduite à réhabiliter, par exemple en la tirant à l'aide d'un câble ou en la faisant se retourner sur elle-même, puis on utilise un système de gonflage que l'on dispose à l'intérieur de la gaine et qui permet de l'appliquer contre la paroi de la conduite à réhabiliter. Ensuite, ou dans le même temps, on polymérise la résine de manière à durcir la gaine et à la faire adhérer de façon durable à la paroi de la conduite, par exemple en utilisant des moyens de chauffage.

Cette technique peut être utilisée pour des canalisations principales ou pour toute conduite de dérivation d'un réseau. Une fois mise en place, la gaine se présente sous la forme d'un élément cylindrique qui se trouve dans une portion courante de la conduite.

Si l'on souhaite réhabiliter une zone de la canalisation principale qui présente un branchement à une conduite secondaire, on dispose de manière classique la gaine dans la zone visée et, une fois la polymérisation effectuée, on vient découper un disque dans cette gaine à l'intersection de la canalisation et de la conduite, de manière à réouvrir cette dernière. Si l'on souhaite réhabiliter une conduite secondaire, on dispose la gaine de la manière précédemment évoquée et l'on fait en sorte que le chemisage se termine avant l'intersection de la conduite avec la canalisation principale, de manière à ne pas perturber l'écoulement des fluides à l'intérieur du réseau.

On comprend qu'il n'est pas possible, selon la technique évoquée ci-dessus, d'effectuer un chemisage complet précisément dans la zone d'intersection de la conduite secondaire et de la canalisation principale. Cette intersection est toutefois une zone fragile, qu'il peut être particulièrement utile de chemiser.

La présente invention vise à proposer un dispositif pour la mise en place d'une gaine de chemisage à un branchement entre une première et une deuxième canalisation, c'est-à-dire plus particulièrement dans la zone d'intersection entre les canalisations.

Le document DE 44 00 742 montre un dispositif qui comprend un chariot muni d'organes de déplacement (constitués par des roues) et des moyens de commande du déplacement du chariot, ce dernier présentant une platine de support pour un outil située au voisinage de l'une de ses extrémités, l'outil étant muni d'un ballon apte à être gonflé au moyen d'un fluide de gonflage pour appliquer la gaine au moins dans une zone voisine de l'intersection desdites canalisations, le dispositif comprenant des moyens de commande du gonflage et du dégonflage du ballon.

Avec ce dispositif, la mise en place de la gaine est réalisée en faisant pivoter la platine de support par rapport au corps du chariot qui est situé dans la deuxième canalisation. Ce mouvement ne permet pas de maîtriser avec précision l'introduction de la gaine dans la première canalisation. Il est en outre difficile de faire coïncider l'axe longitudinal de la première partie de la gaine avec l'axe de la première canalisation.

La présente invention se propose de remédier à ces inconvénients.

Dans ce but, l'outil comporte un bras télescopique susceptible de pivoter par rapport à la platine, autour d'un axe sensiblement perpendiculaire à cette dernière, ce bras ayant une partie d'extrémité dite "de travail", susceptible d'être déplacée en translation, le ballon équipant cette extrémité de travail étant apte à appliquer une première et une deuxième partie de la gaine respectivement contre la paroi de la première canalisation et contre celle de la deuxième canalisation. Le dispositif comprend, en outre, des moyens de commande du pivotement du bras télescopique et des moyens de commande du déplacement de la partie de travail de ce bras.

On comprend que grâce à cette disposition, le chariot peut être déplacé dans la deuxième canalisation (par exemple une canalisation principale) jusqu'à ce qu'il arrive sensiblement au droit de la première canalisation (par exemple une conduite de dérivation). La gaine peut avoir été disposée sur le ballon à l'état dégonflé et être directement transportée jusqu'au branchement par le chariot.

Lorsque le chariot est en position, il est possible de faire pivoter le bras pour faire coïncider son axe avec celui de la première canalisation et d'actionner les moyens de commande du déplacement de la partie de travail de ce bras pour faire, au moins partiellement, pénétrer cette partie de travail munie du ballon et de la gaine dans la première canalisation.

Dans cette situation, il suffit d'actionner les moyens de commande du gonflage du ballon pour appliquer la gaine contre la paroi de la première canalisation. Dans la mesure où il est possible de régler la pénétration de la partie de travail du bras à l'intérieur de la première canalisation à l'aide du bras télescopique, on peut laisser dépasser une partie arrière du ballon et une partie arrière de la gaine en dehors de cette première canalisation, c'est-à-dire dans la deuxième. Alors, lors du gonflage du ballon, sa partie arrière pourra appliquer la partie arrière de la gaine contre la paroi de la deuxième canalisation.

Lorsque la mise en place de la gaine est terminée, celle-ci présente une première partie qui s'étend dans la première canalisation, ainsi qu'une deuxième partie qui s'étend dans la deuxième canalisation. Bien évidemment, la zone d'intersection entre les canalisations est alors recouverte par la zone intermédiaire de la gaine entre sa première et sa deuxième partie. Le branchement est ainsi totalement réhabilité, la gaine étant présente dans toutes les zones fragiles.

Le durcissement de la gaine (la polymérisation de la résine qui l'imprègne) peut être obtenu à l'aide d'un dispositif de polymérisation séparée, tel qu'un système chauffant ou un système à rayons ultraviolets. Toutefois, l'invention prévoit avantageusement que le fluide de gonflage du ballon soit un fluide chaud, auquel cas on réalise dans le même temps l'application de la gaine contre les parois du branchement et la polymérisation de la résine.

Les zones courantes des canalisations peuvent, quant à elles, être réhabilitées de manière classique.

L'invention concerne également un procédé pour mettre en place une gaine de chemisage à un branchement entre une première et une deuxième canalisation.

On a indiqué au début du présent texte que les techniques connues permettent de mettre en place une gaine de chemisage dans une portion courante d'une canalisation, en amenant la gaine dans la zone à chemiser et en l'appliquant contre les parois à l'aide d'un système gonflable puis en polymérisant la résine dont elle est enduite. Ces procédés connus ne permettent pas de chemiser précisément la zone d'intersection entre deux conduites.

L'invention a donc pour but, pour un procédé dans lequel on fournit un chariot ayant, au voisinage de l'une de ses extrémités, une platine de support pour un outil muni d'un ballon apte à être gonflé au moyen d'un fluide de gonflage et à porter la gaine de chemisage, de proposer un procédé qui permette de mettre en place une gaine de chemisage dans la zone du branchement entre deux canalisations et, précisément, de protéger l'intersection entre ces deux canalisations.

Dans ce but, l'outil comportant un bras télescopique apte à pivoter par rapport à la platine, autour d'un axe sensiblement perpendiculaire à cette dernière, ce bras ayant une partie d'extrémité dite "de travail" susceptible d'être déplacée en translation et le ballon équipant ladite extrémité de travail,
- on dispose la gaine de chemisage sur le ballon, autour de la partie de travail du bras télescopique, en plaçant la partie de la gaine destinée à s'étendre dans la première canalisation du côté de l'extrémité libre de ladite partie de travail,
- tout en maintenant le bras dans une position rétractée, on déplace le chariot à l'intérieur de la deuxième canalisation jusqu'à amener le bras sensiblement au niveau de la première canalisation,
- on fait pivoter le bras de manière à sensiblement l'aligner avec l'axe de la première canalisation,
- on déplace la partie de travail du bras pour la faire pénétrer dans ladite première canalisation et on gonfle le ballon pour appliquer respectivement les première et deuxième parties de la gaine contre les parois des première et deuxième canalisations.

On comprend que le procédé selon l'invention permet, de manière très simple, d'amener la gaine de chemisage à la position voulue puis de la mettre en place. En effet, la gaine peut être préalablement disposée sur le ballon à l'état non gonflé et le bras placé dans une position dans laquelle il ne dépasse pas du volume enveloppant le chariot de manière à éviter qu'il ne s'accroche à la paroi de la canalisation lors du déplacement du chariot.

Pour permettre l'application des première et deuxième parties de la gaine respectivement contre les parois des première et deuxième canalisations, et donc également dans la zone d'intersection entre ces canalisations, il suffit de faire pénétrer la partie de travail du bras dans la première canalisation tout en laissant subsister en dehors de cette canalisation la partie arrière du ballon. Ainsi, lors du gonflage, la partie du ballon se trouvant dans la première canalisation applique la première partie de la gaine contre la paroi de cette première canalisation, tandis que la partie arrière du ballon applique la deuxième partie de la gaine contre la paroi de la deuxième canalisation. La zone intermédiaire de la gaine entre ces première et deuxième parties est alors naturellement appliquée précisément à l'intersection entre les deux canalisations.

Le procédé peut comprendre une étape de polymérisation de la résine qui peut être réalisée en utilisant un fluide chauffé pour gonfler le ballon.

L'invention concerne encore une gaine pour le chemisage d'un branchement entre une première et une deuxième canalisation.

On a indiqué précédemment qu'il est connu d'utiliser des gaines auxquelles on donne une forme cylindrique pour chemiser une portion courante d'une canalisation. Pour chemiser une zone de branchement entre deux canalisations, il faut une gaine capable de recouvrir totalement l'intersection, c'est-à-dire toute la zone de transition, entre ces canalisations. L'invention vise donc à proposer une gaine qui permette de chemiser un tel branchement, notamment dans cette zone de transition.

Dans ce but, la gaine selon l'invention comporte une première partie destinée à être appliquée contre la paroi de la première canalisation pour chemiser une partie d'extrémité de cette première canalisation proche de son intersection avec la deuxième canalisation, et une deuxième partie, raccordée à ladite première partie et destinée à être appliquée contre la paroi de la deuxième canalisation au moins dans une zone voisine de ladite intersection.

On comprend que la gaine selon l'invention forme un ensemble continu dont la zone intermédiaire entre les première et deuxième parties chemise la zone d'intersection entre les deux canalisations.

La deuxième partie peut être constituée par une collerette s'étendant sensiblement radialement par rapport à la première partie qui, elle, est cylindrique.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue schématique de dessus montrant un dispositif conforme à l'invention,
- les figures 2 à 5 sont des vues schématiques montrant des étapes successives du procédé conforme à l'invention, et,
- les figures 6 et 7 montrent deux variantes d'une gaine conforme à l'invention.

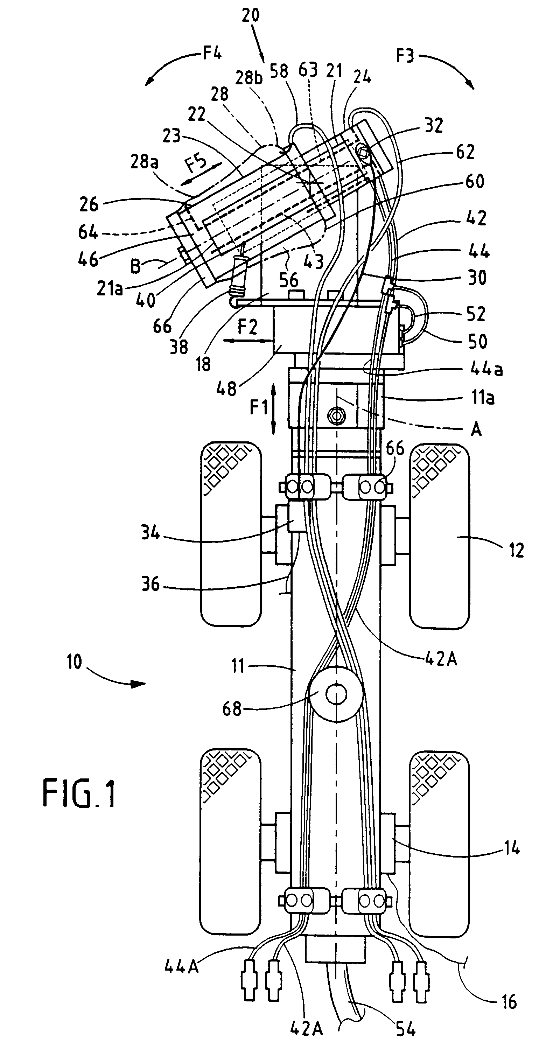

Le dispositif de la figure 1 comporte un chariot, désigné par la référence générale 10, muni d'organes de déplacement, constitués dans l'exemple représenté par des roues 12. La forme et la dimension de ce dispositif lui permettent de se déplacer à l'intérieur d'une canalisation.

Le dispositif comporte des moyens de commande du déplacement du chariot. Par exemple, ces moyens comprennent un moteur électrique 14 capable d'entraîner en rotation l'une des paires de roues, ce moteur étant alimenté à l'aide d'un câble électrique 16 qui est ramené à une extrémité de la canalisation ou en surface, c'est-à-dire à un endroit où peut se trouver un manipulateur. De manière générale, tout type de commande du moteur peut être utilisé, par exemple une commande à distance avec ou sans fil.

Le chariot 10 présente une platine de support 18 pour un outil. Cette platine est située au voisinage de l'une des extrémités longitudinales du chariot que l'on dénommera dans la suite "tête" du chariot.

La tête du chariot est représentée plus en détail de manière bien décrire le fonctionnement de l'outil. Toutefois, cette représentation reste schématique, de sorte que certains éléments qui sont en fait cachés dans une vue extérieure, sont représentés en traits pleins pour bien montrer leur position.

L'outil comporte un bras télescopique 20 susceptible de pivoter par rapport à la platine 18 autour d'un axe 22 sensiblement perpendiculaire à cette platine. Plus précisément, le bras télescopique est monté sur un bras de support 24 qui est disposé sur la platine 18. C'est ce bras de support qui pivote par rapport à la platine autour de l'axe 22. Le bras télescopique est quant à lui monté sur ce bras de support 24. A cet effet, le bras 24 a la forme d'un L, dont la base est montée sur la platine 18 et dont la partie relevée reçoit une extrémité du bras 20.

Ce bras télescopique a une partie d'extrémité 26 dite "extrémité de travail". C'est cette extrémité qui est susceptible d'être déplacée en translation lorsque l'on étire ou que l'on rétracte le bras télescopique. Elle est munie d'un ballon 28 représenté en traits mixtes interrompus. Ce ballon 28 peut être gonflé à l'aide d'un fluide de gonflage pour appliquer la gaine contre les parois des canalisations, au moins dans la zone de leur intersection.

Le dispositif comporte des moyens de commande du pivotement du bras télescopique 20, des moyens de commande du déplacement de la partie de travail 26 de ce bras et des moyens de commande du gonflage et du dégonflage du ballon.

Par exemple, une réalisation simple des moyens de commande du pivotement du bras télescopique associe un câble de traction et un ressort de rappel. Le câble 30 est, d'une part, raccordé au bras télescopique ou, dans l'exemple représenté, au bras de support 24, dans une zone 32 excentrée par rapport à l'axe de rotation 22 et, d'autre part, raccordé à des moyens de traction vers l'arrière, constitués dans l'exemple représenté par un moteur 34 qui peut être actionné à distance à l'aide d'un câble électrique 36. On comprend que lorsque le câble 30 est tiré vers l'arrière, l'ensemble comprenant le bras télescopique et le bras de support est sollicité en pivotement dans le sens de la flèche F3. Pour faire pivoter cet ensemble dans l'autre sens, celui de la flèche F4, un ressort de rappel 38 est raccordé, d'une part, au bras de support 24 dans une zone excentrée 40 située de l'autre côté de l'axe 22 par rapport à la zone 32 et, d'autre part, à un élément fixe tel que la platine 18.

Ceci constitue un exemple de réalisation. Il est évidemment possible d'utiliser une autre réalisation telle qu'un moteur directement raccordé au bras de support 24.

Conformément à la variante représentée, le bras télescopique 20 comporte avantageusement un vérin comprenant une tige 21 et un cylindre 23. Son extrémité de travail 26 est alors constituée par au moins une portion du cylindre 23, autour de laquelle est disposé le ballon 28. Dans l'exemple représenté, la partie de travail 26 est pratiquement constituée par l'intégralité du cylindre 23. Ainsi, la tige 21 du vérin reste fixe en translation et c'est le cylindre qui est déplacé lors de l'étirement ou de la rétraction du bras télescopique.

Les moyens de commande du déplacement de cette partie de travail comprennent des conduits de circulation de fluide, deux conduits 42 et 44 qui débouchent tous deux dans la chambre 46 ménagée entre la tige 21 et le cylindre 23. Le conduit 42 comporte un tronçon de perçage 43 réalisé dans la tige 21 et débouche au voisinage de l'extrémité libre 21a de cette dernière, tandis que le conduit 44 débouche dans la chambre 46 au voisinage de la paroi du cylindre 23. Ces conduits 42 et 44 sont raccordés à des tuyaux, respectivement 42A et 44A qui sont eux-mêmes ramenés vers l'extrémité arrière du dispositif pour être branchés sur un circuit de fluide.

On comprend qu'en agissant sur la circulation du fluide dans les conduits 42 et 44, on peut déplacer l'extrémité de travail 26 du bras télescopique 20 selon la flèche F5 dans le sens de l'extension ou de la rétraction de ce bras.

En variante, le dispositif peut comporter un autre vérin dotant la tête d'une capacité à se déplacer selon la flèche F2, transversalement au chariot. Ce vérin est désigné par la référence générale 48 sur la figure 1. Il peut être alimenté en fluide indépendamment du bras télescopique 20.

On peut toutefois préférer gérer en parallèle les déplacements de ces deux vérins. Dans ce cas, les deux conduits 50 et 52 de circulation de fluide qui permettent d'actionner le vérin 48 peuvent être branchés en parallèle aux conduits 42 et 44 à l'aide de dérivations sur les conduits 42A et 44A.

Ceci constitue une variante intéressante dans la mesure où les mouvements du bras télescopique 20 et du vérin 48 sont du même ordre et visent tous les deux à étendre le bras sensiblement transversalement au-delà du volume qui englobe le corps du chariot pour permettre à son extrémité de travail de pénétrer dans une conduite secondaire.

La tête du dispositif peut elle-même être dotée d'une capacité de déplacement par rapport au reste du corps 11 du chariot. A cet effet, celui-ci peut contenir un ou plusieurs vérins qui sont alimentés en fluide à raide de conduites qui, sur la figure 1 sont globalement comprises dans une prise de branchement 54. Ainsi, l'extrémité avant 11a du corps du chariot, sur laquelle sont successivement montés le vérin 48 et la platine 18 peut être l'extrémité d'une tige de vérin apte à se déplacer selon la flèche F1 parallèlement à l'axe longitudinal A du corps du chariot. Des moyens connus peuvent également être mis en place pour commander la rotation de cette extrémité 11a autour de l'axe A.

Ainsi, après avoir globalement positionné le chariot dans la région du branchement en agissant sur le moteur 14, il est possible d'actionner la tige 11a du vérin du corps du chariot pour la déplacer selon la flèche F1 et la positionner plus exactement au droit de la conduite de dérivation dont on souhaite chemiser la zone d'intersection avec la canalisation principale. Ensuite, en agissant sur le câble 30, on fait pivoter le bras de support 24 pour aligner l'axe B du bras télescopique avec celui de la conduite secondaire. Pour faire pénétrer l'extrémité de travail de ce bras dans cette conduite, on agit à la fois sur le vérin 48 et sur le bras télescopique 20 en lui-même. Si la conduite secondaire ne débouche pas dans le plan médian de la canalisation principale, on peut faire tourner l'extrémité avant 11a du corps du chariot pour faire pivoter l'ensemble de la tête autour de l'axe A et faire coïncider le plan médian de l'extrémité de travail 26 du bras télescopique avec celui de la conduite secondaire.

Pour visualiser la position de la tête du chariot, celui-ci peut être équipé d'une caméra. On peut également, dans le même but, utiliser un deuxième chariot, placé en avant du premier et portant une caméra braquée sur le branchement.

Le ballon 28 est gonflé à l'aide de conduites de circulation de fluide qui débouchent toutes deux dans la chambre 56 ménagée entre le ballon et la paroi extérieure du cylindre 23. Par exemple, la première conduite 58 est raccordée à un perçage de la bague arrière 60 qui maintient l'extrémité arrière du ballon (son extrémité opposée à l'extrémité libre du bras télescopique) par rapport au cylindre 23. La deuxième conduite 62 peut quant à elle déboucher au voisinage de l'extrémité avant de la chambre 56. A cet effet, elle est raccordée à un perçage 63 de la tige 21, perçage lui-même raccordé à un flexible 64 suffisamment long pour accompagner l'extension et la rétractation du bras télescopique 26, ce flexible étant branché sur un perçage de la paroi du cylindre 23 et débouchant ainsi au voisinage de l'extrémité avant du ballon.

Les différentes conduites de circulation de fluide servant à alimenter les vérins, ou à gonfler ou dégonfler le ballon, peuvent être raccordées à des circuits de fluide dans lesquels la circulation est gérée en surface par un manipulateur.

Des pièces telles que des colliers 66 ou une tige à champignon 68 peuvent être prévues pour maintenir les différents conduits au plus près du corps 11 du chariot.

Le ballon 28 est maintenu sur l'extrémité de travail 26 du bras 20 par une bague 66 située à son extrémité avant 28a et une bague 60, précédemment évoquée, située à son extrémité arrière 28b.

On voit que ce ballon, lorsqu'il est pratiquement dégonflé, présente globalement la forme d'une poire, le diamètre de son extrémité arrière 28b étant supérieur à celui de son extrémité avant 28a. Grâce à ces dispositions il présente, à l'état gonflé, une zone renflée qui se trouve vers son extrémité arrière. On verra dans la suite que cette zone renflée sert à bien appliquer la collerette de la gaine de chemisage contre le bord de l'intersection de la conduite secondaire et de la canalisation principale.

On a indiqué précédemment que les gaines de réhabilitation étaient couramment enduites de résine polymérisable. Lorsqu'il s'agit de résine thermodurcissable, le dispositif comporte avantageusement des moyens de chauffage du fluide de gonflage du ballon. Ainsi, le gonflage du ballon sert non seulement à appliquer la gaine contre les parois des canalisations, mais également à durcir la résine dont elle est enduite. Ces moyens de chauffage peuvent être par exemple constitués par une résistance (non représentée) située sur le trajet du fluide circulant dans les conduites 58 et 62.

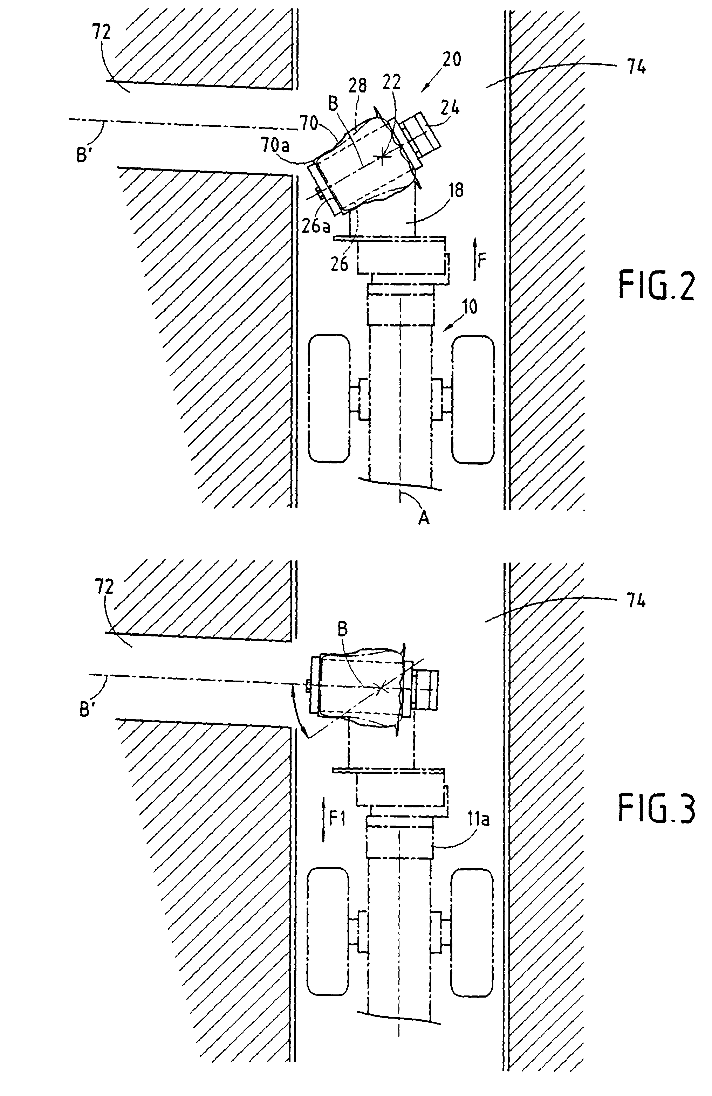

En référence aux figures 2 à 5, on décrit maintenant les différentes étapes du procédé de chemisage conforme à l'invention. Sur ces figures, le dispositif mis en oeuvre est représenté de manière très schématique, seuls les éléments indispensables à la compréhension du procédé étant quelque peu précisés.

On reconnaît sur la figure 2, le chariot 10 dont l'extrémité avant est munie de la platine 18 de support du bras télescopique 20, qui pivote par rapport à cette platine autour de l'axe 22. Autour de l'extrémité de travail 26 de ce bras, qui est munie du ballon 28, on a disposé la gaine de chemisage 70. Le chariot 10 s'est déplacé dans la canalisation principale 74, dénommée dans la suite "deuxième canalisation", dans le sens de la flèche F jusqu'à ce que sa tête parvienne sensiblement au niveau du branchement. A ce branchement débouche la conduite secondaire 72 dénommée dans la suite "première canalisation". La gaine 70 a été placée sur le ballon 28, de telle sorte que sa partie qui est destinée à s'étendre dans la première canalisation 72 se trouve du côté de l'extrémité libre 26a de la partie de travail 26 du bras 20. On constate toutefois que l'extrémité libre 70a de cette gaine 70 reste légèrement en deçà de l'extrémité 26a.

Tout au long du déplacement du chariot dans la canalisation 74 pour qu'il parvienne au niveau du branchement, on a maintenu le bras 20 dans une position rétractée, dans laquelle le ballon et la gaine restent globalement contenus dans le volume que définit le chariot. Cette position rétractée est obtenue en plaçant le bras 20 dans sa position de rétractation, en ramenant s'il existe le vérin 48 dans une position pratiquement centrée sur l'axe longitudinal A du chariot, et en plaçant le bras télescopique dans une position angulaire appropriée par rapport à cet axe A. On peut par exemple choisir d'aligner le bras avec l'axe A en le plaçant dans le prolongement du chariot ou, comme dans l'exemple représenté, de le ramener au maximum vers l'arrière.

Lorsque le chariot est arrivé dans la position souhaitée, on fait pivoter le bras 20 de manière à sensiblement l'aligner avec la première canalisation 72 comme le montre la figure 3 sur laquelle on constate effectivement que l'axe B de l'extrémité de travail 26 du bras se superpose sur l'axe B' de la canalisation 72. Il faut noter qu'à cette occasion, il est possible non seulement d'agir sur le câble 30 pour faire pivoter le bras par rapport à la platine 18, mais également si nécessaire de faire tourner l'ensemble de la tête 11a du chariot autour de l'axe A. Par ailleurs, comme on l'a brièvement indiqué précédemment, pour caler les axes du bras et de la première canalisation, on peut également déplacer la tête 11a dans le sens de la flèche F1 si le corps du chariot comporte un vérin approprié.

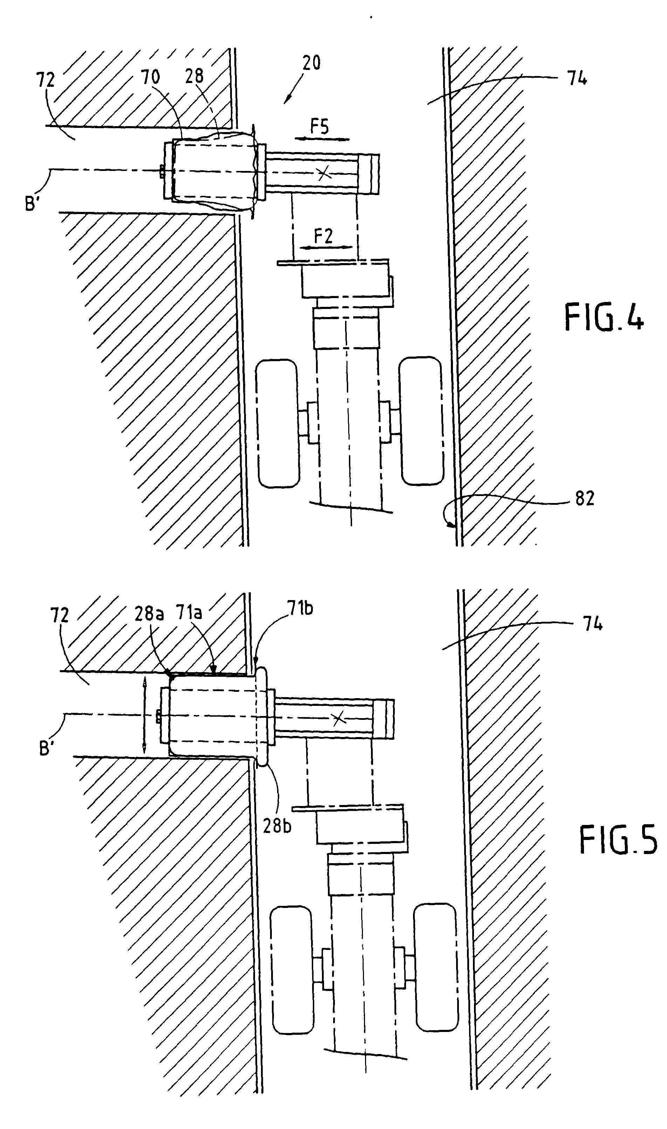

Lorsque ces axes B et B' sont alignés, on déplace la partie de travail 26 du bras 20 pour la faire pénétrer dans la première canalisation 72, comme le montre la figure 4. A cet effet, on peut agir sur le bras télescopique et sur le vérin 48 précédemment évoqués pour les déplacer respectivement selon la flèche F5 et F2 dans le sens tendant à les rapprocher de la première canalisation 72.

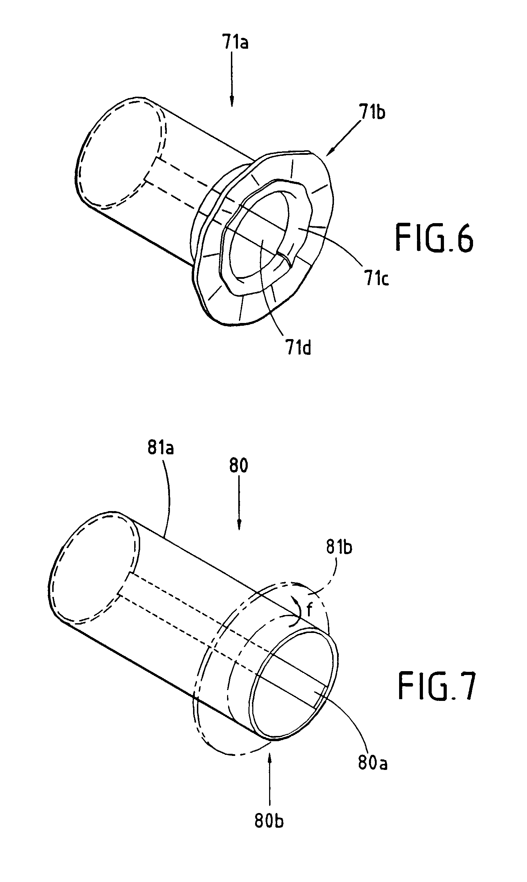

Lorsque le ballon et la gaine qu'il porte ont pénétré sur une longueur suffisante dans la canalisation 72, on gonfle le ballon pour l'amener dans la situation illustrée par la figure 5 de manière à appliquer respectivement la première et la deuxième partie de la gaine, respectivement 71a et 71b, contre les parois des première et deuxième canalisations.

Le ballon 28 est gonflé de manière à épouser la forme de la canalisation 72 pour toute sa partie avant 28a, ce qui permet de plaquer la première partie 71a de la gaine contre la paroi de la canalisation 72. A l'arrière du ballon s'est formé le bourrelet 28b dont le diamètre est supérieur à celui de la première canalisation et ce bourrelet vient plaquer la deuxième partie 71b de la gaine, dont on verra par la suite qu'elle peut adopter la forme d'une collerette, pour l'appliquer sur la paroi de la deuxième canalisation 74, sur le pourtour de l'intersection entre les conduites 72 et 74.

On remarque sur les figures 2 à 5 que la gaine 70 présente, dès avant sa mise en place, une première partie 71a qui est globalement cylindrique et une deuxième partie 71b qui est relevée radialement et forme une collerette située à l'extrémité de la gaine destinée à se trouver dans la deuxième canalisation 74. Ainsi, l'effet du gonflage du ballon est d'appliquer la première partie 71a de la gaine contre la paroi de la première canalisation 72 et d'appliquer la deuxième partie de la gaine, c'est-à-dire la collerette contre la paroi de la deuxième canalisation 74.

Une telle gaine est représentée sur la figure 6, la première partie 71a présente la forme d'un manchon tubulaire, tandis que la deuxième partie 71b présente la forme d'une rondelle disposée transversalement, à une extrémité du manchon, pour former une collerette. Les deux parties sont raccordées à l'aide d'une bande intermédiaire 71c collée et/ou cousue qui, dans l'exemple représenté, se trouve sur la face interne de la gaine. La première partie 71a, réalisée à partir d'une plaque de matériau roulée sur elle-même à la manière d'un cylindre, présente une zone longitudinale 71d de couture et/ou de collage des deux extrémités de cette plaque.

En variante, la gaine peut présenter initialement la forme d'un tube et être amenée à la forme souhaitée pour le chemisage sous l'effet du gonflage du ballon. La figure 7 montre une gaine de ce type, désignée par la référence 80. Cette gaine est réalisée par exemple en roulant une plaque de matériau de manière à joindre ses deux extrémités opposées sur une zone 80a de couture et/ou de collage.

Comme l'indique la flèche f, sous l'effet du gonflage du ballon, une des extrémités 80b de cette gaine peut se replier radialement vers l'extérieur de manière à former une collerette 81b représentée en traits mixtes interrompus. Cette collerette 81b forme donc la deuxième partie de la gaine qui vient s'appliquer contre la paroi de la deuxième canalisation, tandis que le reste de la gaine forme la première partie 81a qui vient s'appliquer contre la paroi de la première canalisation.

Pour mettre en place cette gaine 80, on fait pénétrer la partie de travail 26 du bras télescopique 20 dans la première canalisation 72 tout au plus jusqu'à une position dans laquelle seules des parties avant de la gaine et du ballon sont disposées dans cette première canalisation. En d'autres termes on laisse dépasser en dehors de cette canalisation l'extrémité 80b de la gaine à partir de laquelle on déformera la collerette 81a et la partie arrière du ballon qui, lorsque ce dernier sera gonflée, formera le renflement 28b. Ces parties arrière 80b de la gaine et 28b du ballon dépassent donc en dehors de la première canalisation 72, à l'intérieur de la deuxième canalisation 74.

Ensuite, on gonfle le ballon jusqu'à ce que sa partie avant 28a présente un diamètre sensiblement égal à celui de la première canalisation 72, de manière à appliquer la partie avant de la gaine contre la paroi de la première canalisation 72. Lors du gonflage du ballon, sa partie arrière forme le renflement 28b de diamètre supérieur à celui de la première canalisation 72 et vient ainsi déformer la partie arrière 80b de la gaine pour lui donner la forme de la collerette 81b. Ce renflement 28b vient appliquer la collerette contre la paroi de la deuxième canalisation 74, sur tout le pourtour de l'intersection des première et deuxième canalisations. Eventuellement, pour appliquer fortement cette collerette contre cette paroi, on peut solliciter une fois encore le bras télescopique dans le sens tendant à déplacer sa partie de travail vers la première canalisation.

Comme on l'a indiqué précédemment, le ballon peut initialement présenter une tendance naturelle à avoir un diamètre plus grand vers sa partie arrière que vers sa partie avant, pour former naturellement le renflement 28b. Toutefois, dans la mesure où l'on laisse dépasser une partie arrière du ballon au dehors de la première canalisation 72, le gonflage du ballon pourra amener au maximum sa partie avant au diamètre de cette première canalisation, tandis que sa partie arrière, si la pression de gonflage est augmentée, aura naturellement tendance à présenter un renflement de diamètre supérieur à celui de la première canalisation.

Lorsque la gaine (70 ou 80) est enduite d'une résine thermodurcissable, on peut polymériser cette résine en chauffant un fluide pour le porter à la température de durcissement de la résine et en utilisant ce fluide chaud (par exemple de l'eau) pour gonfler le ballon. Celui-ci est réalisé dans un matériau, par exemple du plastique, qui laisse passer la chaleur.

Dans l'une ou l'autre des variantes de réalisation, la gaine pour le chemisage du branchement comporte une première partie (71a ou 81a) destinée à être appliquée contre la paroi de la première canalisation 72 pour chemiser une partie d'extrémité de cette première canalisation proche de son intersection avec la deuxième canalisation 74, et une deuxième partie (71b ou 81b) raccordée à la première partie et destinée, quant à elle, à être appliquée contre la paroi de la deuxième canalisation 74 au moins dans une zone voisine de l'intersection entre les deux canalisations. Cette zone voisine s'étend sur tout le pourtour de l'intersection, de sorte que la deuxième partie de la gaine peut, comme on l'a indiqué précédemment, présenter la forme d'une collerette.

La gaine peut avoir une structure stratifiée. Plus précisément, elle peut comporter un premier manchon réalisé en une matière composite perméable à la résine polymérisable. Par exemple, cette matière composite peut être un stratifié de tissu et de non tissé de fibres de verre ou toute matière du même type. Ce premier manchon peut être réalisé en découpant des bandes de matériau et en les roulant sur elles-mêmes pour joindre leurs extrémités opposées. En variante, on peut directement réaliser un tissé ou un non tissé ayant la forme d'un manchon.

La gaine peut comporter un deuxième manchon qui formera sa membrane intérieure et peut être en toute matière synthétique imperméable telle que du PVC, du polyéthylène, ou du polyuréthanne ou toute autre matière du même type. Sur sa face interne, destinée à venir au contact du premier manchon, ce deuxième manchon peut comporter un géotextile de fibres pouvant adhérer au premier manchon lorsque celui-ci est enduit de résine. La gaine peut encore comporter un troisième manchon qui viendra constituer sa face externe. Ce troisième manchon est analogue au deuxième et est disposé de telle sorte que le premier manchon soit pris en sandwich entre les deux autres. La résine thermodurcissable est par exemple une résine époxydique, polyester, vinylester ou phénolique.

Après polymérisation et donc durcissement de la résine, le premier manchon enduit de cette résine permettra de restituer à la canalisation chemisée la résistance mécanique souhaitée. Pour ce qui est de l'étanchéité, celle-ci pourra plutôt être assurée grâce à la présence du deuxième et/ou du troisième manchon.

Grâce à la mise en place de la gaine selon l'invention, le chemisage est assuré sans aucune discontinuité dans la zone d'intersection des première et deuxième canalisations.

Enfin, comme on le voit sur les figures 2 à 5, on peut chemiser la zone d'intersection après avoir déjà pourvu la deuxième conduite (canalisation principale) d'un chemisage 82 sur toute une partie de sa longueur, ce chemisage ayant été découpé pour s'ouvrir sur la première conduite (conduite secondaire). La gaine de chemisage de branchement est disposée à l'extrémité de la conduite secondaire voisine de son intersection avec la conduite principale et passe à travers l'ouverture du chemisage 82. Sa collerette est repliée sur le bord de cette ouverture.

## Revendications

1. Dispositif pour mettre en place une gaine de chemisage à un branchement entre une première et une deuxième canalisation, comportant un chariot (10) muni d'organes de déplacement (12) et des moyens (14, 16) de commande du déplacement du chariot, ce dernier présentant une platine de support (18) pour un outil située au voisinage de l'une de ses extrémités, l'outil étant muni d'un ballon (28) apte à être gonflé au moyen d'un fluide de gonflage pour appliquer la gaine au moins dans une zone voisine de l'intersection desdites canalisations, le dispositif comprenant des moyens (58, 62) de commande du gonflage et du dégonflage du ballon,
caractérisé en ce que l'outil comporte un bras télescopique (20) susceptible de pivoter par rapport à la platine (18), autour d'un axe (22) sensiblement perpendiculaire à cette dernière, ce bras ayant une partie d'extrémité (26) dite "de travail", susceptible d'être déplacée en translation, le ballon équipant ladite extrémité de travail et étant apte à appliquer une première et une deuxième partie de la gaine respectivement contre la paroi de la première canalisation (72) et contre celle de la deuxième canalisation (74) et en ce que le dispositif comprend en outre des moyens (30, 34, 38) de commande du pivotement du bras télescopique (20) et des moyens (42, 44) de commande du déplacement de la partie de travail (26) de ce bras (20).

2. Dispositif selon la revendication 1, caractérisé en ce que le bras télescopique (20) comporte un vérin comprenant une tige (21) et un cylindre (23), la partie de travail (26) du bras étant constituée par au moins une portion du cylindre (23) autour de laquelle est disposé le ballon (28), la tige restant fixe en translation au cours du déplacement de ladite partie de travail.

3. Dispositif selon la revendication 2, caractérisé en ce qu'il comporte un bras de support (24), disposé sur la platine (18) et apte à pivoter par rapport à cette dernière et en ce que la tige (21) du vérin est fixée à ce bras de support (24).

4. Dispositif selon l'une quelconque des revendications 1 à 3, caractérisé en ce que le ballon présente, à l'état gonflé, une zone renflée (28b) située à l'opposé de l'extrémité libre de la partie de travail (26) du bras télescopique (20).

5. Dispositif selon l'une quelconque des revendications 1 à 4, caractérisé en ce que, la gaine étant enduite de résine thermodurcissable, le dispositif comporte des moyens de chauffage du fluide de gonflage du ballon.

6. Procédé pour mettre en place une gaine de chemisage à un branchement entre une première et une deuxième canalisation, dans lequel :
- on fournit un chariot (10) ayant, au voisinage de l'une de ses extrémités, une platine de support (18) pour un outil muni d'un ballon (28) apte à être gonflé au moyen d'un fluide de gonflage et à porter la gaine de chemisage,
caractérisé en ce que, l'outil comportant un bras télescopique (20) apte à pivoter par rapport à la platine (18), autour d'un axe (22) sensiblement perpendiculaire à cette dernière, ce bras ayant une partie d'extrémité (26) dite "de travail" susceptible d'être déplacée en translation et le ballon équipant ladite extrémité de travail,
- on dispose la gaine de chemisage (70 ; 80) sur le ballon (28), autour de la partie de travail (26) du bras télescopique (20), en plaçant la partie de la gaine destinée à s'étendre dans la première canalisation du côté de l'extrémité libre (26a) de ladite partie de travail,
- tout en maintenant le bras (20) dans une position rétractée, on déplace le chariot (10) à l'intérieur de la deuxième canalisation (74) jusqu'à amener le bras sensiblement au niveau de la première canalisation (72),
- on fait pivoter le bras (20) de manière à sensiblement l'aligner avec l'axe (B') de la première canalisation (72),
- on déplace la partie de travail (26) du bras (20) pour la faire pénétrer dans ladite première canalisation (72) et on gonfle le ballon (28) pour appliquer respectivement les première et deuxième parties (71a, 71b ; 81a, 81b) de la gaine (70 ; 80) contre les parois des première et deuxième canalisations (72, 74).

7. Procédé selon la revendication 6, caractérisé en ce que, la gaine (80) ayant initialement la forme d'un tube, on fait pénétrer la partie de travail (26) du bras télescopique (20) dans la première canalisation (72) tout au plus jusqu'à une position dans laquelle seules des parties avant de la gaine et du ballon sont disposées dans cette première canalisation, des parties arrière (80b) de ladite gaine et (28b) dudit ballon dépassant, en-dehors de la première canalisation (72), à l'intérieur de la deuxième canalisation (74), et l'on gonfle le ballon (28) de manière à doter sa partie avant (28a) d'un diamètre sensiblement égal à celui de la première canalisation (72) pour appliquer la partie avant la gaine (81a) contre la paroi de cette canalisation et à doter la partie arrière de ce ballon d'un renflement (28b) de diamètre supérieur à celui de la première canalisation pour déformer la partie arrière (80b) de la gaine en lui donnant sensiblement la forme d'une collerette (81b) et l'appliquer contre la paroi de la deuxième canalisation (74).

8. Procédé selon la revendication 6 ou 7, caractérisé en ce que, la gaine (70, 80) étant enduite d'une résine thermodurcissable, on chauffe un fluide pour le porter à une température de durcissement de cette résine et on utilise ce fluide chaud pour gonfler le ballon (28).

9. Gaine (70, 80) pour le chemisage d'un branchement entre une première (72) et une deuxième (74) canalisation,
caractérisée en ce qu'elle comporte une première partie (71a, 81a) destinée à être appliquée contre la paroi de la première canalisation (72) pour chemiser une partie d'extrémité de cette première canalisation proche de son intersection avec la deuxième canalisation (74), et une deuxième partie (71b, 81b), raccordée à ladite première partie et destinée à être appliquée contre la paroi de la deuxième canalisation (74) au moins dans une zone voisine de ladite intersection.

10. Gaine selon la revendication 9, caractérisée en ce que la première partie (71a) a la forme d'un manchon tubulaire, tandis que la deuxième partie (71b) a la forme d'une collerette s'étendant, à partir de l'une des extrémités de ce manchon, sensiblement transversalement à ce dernier.
